# FASCICULE DE BREVET EUROPEEN

(11) **EP 4 402 532 B1**
(45) Date de publication et mention de la délivrance du brevet: **27.08.2025**
(21) Numéro de dépôt: 22773732.7
(22) Date de dépôt: 12.09.2022
(51) Int. Cl.: G02F 1/01, G02F 1/295

(54) **MODULATEUR DE PHASE ET PROCÉDÉ DE RÉALISATION**
PHASENMODULATOR UND VERFAHREN ZU SEINER HERSTELLUNG
PHASE MODULATOR AND METHOD FOR PRODUCING SAME

(30) Priorité: 13.09.2021 FR 2109573
(43) Date de publication de la demande: 24.07.2024
(73) Titulaire: Commissariat à l'Energie Atomique et aux Energies Alternatives, 75015 Paris (FR)
(72) Inventeur: GUERBER, Sylvain, 38054 GRENOBLE Cedex 09 (FR); FAUGIER-TOVAR, Jonathan, 38054 GRENOBLE Cedex 09 (FR); FOWLER, Daivid, 38054 GRENOBLE Cedex 09 (FR)
(74) Mandataire: Hautier IP
(86) Numéro de dépôt international: PCT/EP2022/075321
(87) Numéro de publication internationale: WO 2023/036991

(56) Documents cités:
- CA-A1- 2 130 605
- US-A1- 2019 339 549
- US-A1- 2020 393 547
- SMITH FRANCIS ET AL: "A Design Study of Efficiency Enhancement in Silicon Photonic Thermo-Optic Phase Shifters", 2019 IEEE OPTICAL INTERCONNECTS CONFERENCE (OI), IEEE, 24 April 2019 (2019-04-24), pages 1 - 2, XP033550382, DOI: 10.1109/OIC.2019.8714481

## Description

### DOMAINE TECHNIQUE DE L'INVENTION

Le domaine de l'invention est celui de la photonique intégrée sur puce. L'invention concerne plus particulièrement la réalisation de modulateurs de phase. Ces modulateurs de phase peuvent avantageusement être utilisés dans des circuits de type « réseaux optiques d'antennes phasées » généralement dénommés OPA (acronyme de « Optical Phased Array »), par exemple pour la conception de systèmes de télédétection par laser appelés LIDAR (acronyme de « laser imaging detection and ranging » soit en français « détection et estimation de la distance par laser »).

### ETAT DE LA TECHNIQUE

Un système LiDAR peut combiner deux principales fonctions qui sont la mesure de distance par un faisceau laser et le balayage du faisceau dans l'espace. Dans les systèmes actuels, cette dernière fonction est généralement assurée par un jeu de miroirs orientables. Ce type de solution nécessite une mécanique de haute précision et présente plusieurs inconvénients liés notamment à l'encombrement, à la consommation, à la fiabilité et au coût.

Une nouvelle génération de LiDARs basée sur des réseaux d'antennes optiques phasées OPA se développe pour pallier les inconvénients cités ci-dessus.

De tels réseaux comprennent une série d'antennes optiques séparées par un pas de réseau de l'ordre de la longueur d'onde du faisceau laser. Chaque antenne optique reçoit une partie du faisceau laser et émet un signal optique. Chaque antenne optique comprend un modulateur de phase configuré pour moduler la phase du signal optique. Il est alors possible de contrôler la différence de phase entre les signaux optiques émis d'une antenne à l'autre. En appliquant un gradient de phase linéaire entre les signaux émis par chaque antenne, l'interférence produite prend la forme d'un faisceau dirigé dans une direction donnée. En modifiant la pente de ce gradient de phase, il est ainsi possible de modifier l'angle d'émission de l'OPA.

Pour qu'un OPA produise un faisceau unique, les antennes optiques de l'OPA doivent être proches les unes des autres, avec un pas de réseau de l'ordre de la longueur d'onde du faisceau. Cela pose de nombreux problèmes notamment au niveau des modulateurs de phase qui doivent être très proches les uns des autres en évitant les influences mutuelles entre voisins. Il est donc nécessaire d'isoler les modulateurs de phase entre eux tout en concevant une architecture compacte pour chaque modulateur.

Parmi les différents types de modulateurs de phase, les modulateurs de phase thermo-optiques - exploitant la dépendance de l'indice de réfraction d'un matériau à la température - sont généralement préférés. Un tel modulateur de phase thermo-optique connu est divulgué dans le document « A Design Study of Efficiency Enhancement in Silicon Photonic Thermo-Optic Phase Shifters,» Francis Smith et al., IEEE, 2019 » et schématiquement illustré à la figure 1, et dans le document US 2019/339549 A1 (WATANABE DAICHI [JP] ET AL).

Un élément chauffant 13, par exemple un barreau de TiN, est généralement placé au-dessus du guide d'onde 11 de façon à le chauffer. Des tranchées 21, 22 d'isolation sont généralement formées de part et d'autre du modulateur 1, de façon à confiner la chaleur produite par l'élément chauffant au niveau du guide d'onde. Cela permet d'éviter une diffusion de chaleur dans d'autres modulateurs adjacents. Cela permet également d'augmenter l'efficacité de modulation du modulateur, en augmentant la variation de température au niveau du guide d'onde pour une puissance électrique donnée.

Pour respecter les tolérances de fabrication, le pas de réseau pr séparant deux modulateurs 1 thermo-optiques adjacents est au minimum de 1,2 µm. Pour une longueur d'onde λ de fonctionnement de 905 nm, cela correspond à pr ≈ 1,3 λ. La compacité de ce modulateur thermo-optique n'est donc pas suffisante, notamment pour certaines applications de type OPA fonctionnant à des longueurs d'onde submicroniques. Par ailleurs, la fréquence de modulation d'un tel modulateur est limitée par les phénomènes de diffusion / dissipation thermique.

Il existe donc un besoin consistant à améliorer la compacité d'un modulateur de phase thermo-optique et/ou la fréquence de modulation d'un tel modulateur.

Un objectif de la présente invention est de répondre à ce besoin et de proposer un modulateur de phase thermo-optique qui pallie au moins en partie certains des inconvénients précédemment cités.

Un autre objet de la présente invention concerne un procédé de réalisation d'un tel modulateur de phase thermo-optique.

### RESUME DE L'INVENTION

Pour atteindre cet objectif, selon un mode de réalisation on prévoit un modulateur de phase thermo-optique comprenant un empilement selon une première direction z, ledit empilement comprenant un guide d'onde configuré pour guider un faisceau lumineux de longueur d'onde λ selon une deuxième direction x, une couche d'encapsulation surmontant le guide d'onde et un élément dit chauffant configuré pour chauffer le guide d'onde, ledit élément chauffant surmontant la couche d'encapsulation. Le modulateur comprend en outre des première et deuxième tranchées s'étendant de part et d'autre de l'empilement.

Avantageusement, le guide d'onde, la couche d'encapsulation et l'élément chauffant présentent chacun des premiers et deuxièmes flancs tels que les premiers flancs du guide d'onde, de la couche d'encapsulation et de l'élément chauffant forment au moins en partie un flanc de la première tranchée, et les deuxièmes flancs du guide d'onde, de la couche d'encapsulation et de l'élément chauffant forment au moins en partie un flanc de la deuxième tranchée.

Les flancs du guide d'onde, de la couche d'encapsulation et de l'élément chauffant débouchent ainsi directement dans les tranchées bordant le modulateur.

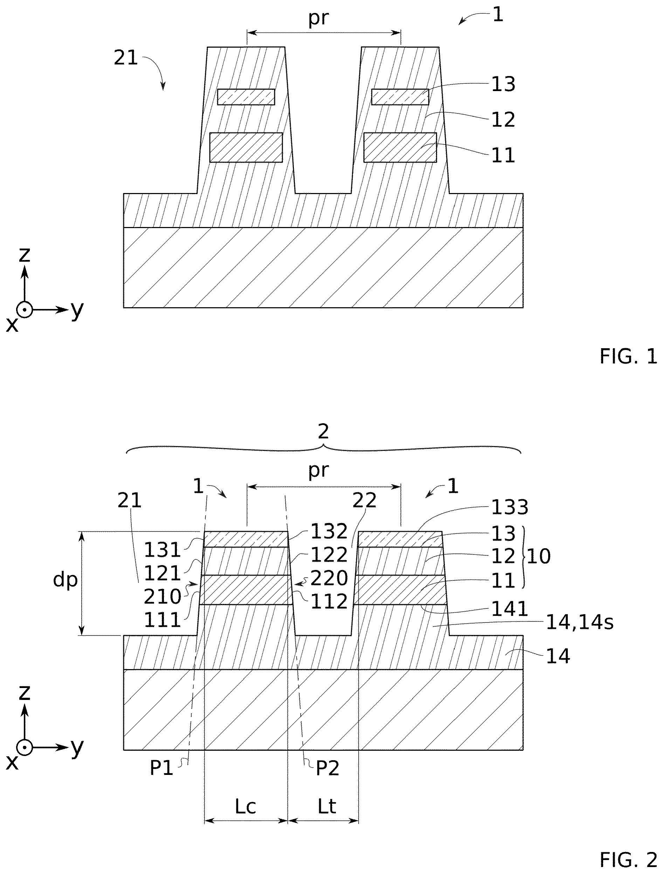

Le modulateur présente donc un encombrement en largeur réduit par rapport au modulateur connu illustré à la figure 1. La compacité du modulateur est augmentée. Cela permet de rapprocher les modulateurs entre eux, par exemple dans le cas d'un système optique de type OPA.

Par ailleurs, le guide d'onde est directement au contact de l'air circulant dans les tranchées. Cela permet d'améliorer le confinement thermique au sein du guide d'onde. La puissance nécessaire pour chauffer le guide d'onde est diminuée. L'efficacité du modulateur est ainsi améliorée.

En outre, l'air circulant dans les tranchées présente un faible indice de réfraction. Cela augmente le confinement optique du faisceau dans le guide d'onde, par contraste d'indices.

Dans l'architecture connue et illustrée à la figure 1, un espace résiduel, typiquement de l'ordre de 150nm, est nécessairement prévu entre les flancs du guide et ceux de la tranchée. Cet espace résiduel sert notamment à tolérer les erreurs d'alignement entre les étapes de lithographie des guides d'onde et des tranchées, lors de la fabrication du modulateur.

Selon un autre aspect de la présente invention, un procédé de réalisation du modulateur tel que décrit dans le mode de réalisation ci-dessus est proposé.

Selon un mode de réalisation on prévoit un procédé de réalisation d'au moins un modulateur de phase thermo-optique comprenant un empilement selon une première direction z, ledit empilement comprenant un guide d'onde configuré pour guider un faisceau lumineux de longueur d'onde λ selon une deuxième direction x, une couche d'encapsulation surmontant le guide d'onde, un élément dit chauffant configuré pour chauffer le guide d'onde et surmontant la couche d'encapsulation, ledit modulateur comprenant en outre des première et deuxième tranchées s'étendant de part et d'autre de l'empilement.

Le procédé comprend :
- Une formation d'un empilement de base comprenant, selon la première direction z, un motif de guide d'onde, une couche d'encapsulation initiale surmontant le motif de guide d'onde, et l'élément chauffant surmontant la couche d'encapsulation initiale,
- Une gravure de l'empilement de base selon la première direction z, configurée pour former les première et deuxième tranchées et l'empilement bordé par lesdites première et deuxième tranchées, le guide d'onde étant obtenu à partir du motif de guide d'onde, et la couche d'encapsulation étant obtenue à partir de la couche d'encapsulation initiale.

Avantageusement, l'élément chauffant forme un masque de gravure lors de la formation par gravure des première et deuxième tranchées, de sorte que le guide d'onde, la couche d'encapsulation et l'élément chauffant présentent chacun des premiers et deuxièmes flancs tels que les premiers flancs du guide d'onde, de la couche d'encapsulation et de l'élément chauffant forment au moins en partie un flanc de la première tranchée, et les deuxièmes flancs du guide d'onde, de la couche d'encapsulation et de l'élément chauffant forment au moins en partie un flanc de la deuxième tranchée.

L'élément chauffant présente ainsi des flancs formant en partie des flancs des première et deuxième tranchées.

Ainsi, il n'est plus nécessaire de prévoir un espace résiduel pour tolérer un désalignement entre l'élément chauffant et un masque de gravure externe pour la gravure des tranchées, puisque l'élément chauffant lui-même sert de masque de gravure pour la formation des tranchées.

La gravure des tranchées est dès lors auto-alignée avec l'élément chauffant. Les première et deuxième tranchées sont rapprochées l'une de l'autre. Cela permet de réduire l'encombrement en largeur du modulateur.

Par ailleurs, l'utilisation de l'élément chauffant en tant que masque de gravure permet d'éviter de recourir à un masque de gravure supplémentaire. Le nombre d'étapes du procédé est diminué.

De façon préférée, lors de la formation de l'empilement, le motif de guide d'onde est défini de sorte à présenter, en projection selon la première direction z, une zone dite élargie destinée à former une zone de modulation du guide d'onde et présentant une largeur L prise selon une troisième direction y, et l'élément chauffant est défini de sorte à présenter une largeur Lc selon la troisième direction y, telle que Lc < L de sorte que, lors de la formation par gravure des première et deuxième tranchées, la zone élargie du motif de guide d'onde soit au moins en partie gravée selon la première direction z. Le guide d'onde, au niveau de sa zone de modulation, présente ainsi des flancs formant en partie des flancs des première et deuxième tranchées. L'élément chauffant est alors auto-aligné avec le guide d'onde.

L'utilisation d'une zone élargie permet avantageusement de tolérer les erreurs d'alignement entre l'élément chauffant et le motif de guide d'onde sous-jacent. La contrainte sur l'alignement est ainsi relâchée. Des équipements standards de lithographie peuvent être utilisés. Le coût du procédé est diminué.

Un autre aspect de l'invention concerne un réseau d'antennes optiques phasées (OPA) comprenant une pluralité de modulateurs de phase thermo-optiques tels que décrits ci-dessus, séparés par un pas de réseau pr. Le pas de réseau pr est environ égal à une longueur d'onde λ d'un faisceau lumineux se propageant dans les guides d'onde du réseau, en fonctionnement. Le pas de réseau pr est de préférence inférieur à 1 µm. Une application avantageuse concerne la fabrication d'OPA compact fonctionnant à une longueur d'onde de l'ordre de 905 nm.

Les autres objets, caractéristiques et avantages de la présente invention apparaîtront à l'examen de la description suivante et des dessins d'accompagnement. Il est entendu que d'autres avantages peuvent être incorporés. En particulier, certaines caractéristiques et certains avantages du modulateur peuvent s'appliquer *mutatis mutandis* au système optique de type OPA et/ou au procédé de fabrication de ce modulateur, et réciproquement.

### BREVE DESCRIPTION DES FIGURES

Les buts, objets, ainsi que les caractéristiques et avantages de l'invention ressortiront mieux de la description détaillée de modes de réalisation de cette dernière qui sont illustrés par les dessins d'accompagnement suivants dans lesquels :
La figure 1 illustre schématiquement en coupe transverse un modulateur de phase thermo-optique selon l'art antérieur.
La figure 2 illustre schématiquement en coupe transverse un modulateur de phase thermo-optique selon un mode de réalisation de la présente invention.

Les figures nA (n=3...8) illustrent schématiquement en vue de dessus une étape de réalisation d'un modulateur de phase thermo-optique selon un mode de réalisation de la présente invention.

Les figures nB (n=3... 8) illustrent schématiquement en coupe transverse selon le plan C-C l'étape de réalisation d'un modulateur de phase thermo-optique illustrée à la figure nA correspondante, selon un mode de réalisation de la présente invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, sur les schémas de principe, les dimensions des différents éléments (guide d'onde, élément chauffant, zones d'injection, de transition, de modulation...) ne sont pas représentatives de la réalité.

### DESCRIPTION DÉTAILLÉE DE L'INVENTION

Avant d'entamer une revue détaillée de modes de réalisation de l'invention, sont énoncées ci-après des caractéristiques optionnelles qui peuvent éventuellement être utilisées en association ou alternativement :
Selon un exemple, les premiers flancs du guide d'onde, de la couche d'encapsulation et de l'élément chauffant débouchent directement dans la première tranchée. Selon un exemple, les deuxièmes flancs du guide d'onde, de la couche d'encapsulation et de l'élément chauffant débouchent directement dans la deuxième tranchée.

Selon un exemple, les premiers flancs du guide d'onde, de la couche d'encapsulation et de l'élément chauffant sont sensiblement compris dans un même premier plan. Selon un exemple, les deuxièmes flancs du guide d'onde, de la couche d'encapsulation et de l'élément chauffant sont sensiblement compris dans un même deuxième plan.

Selon un exemple, l'élément chauffant présente un sommet exposé à l'air.

Selon un exemple, l'élément chauffant s'étend au-delà des tranchées selon la deuxième direction x.

Selon un exemple, le guide d'onde comprend une zone de modulation et au moins une zone de transition. Selon un exemple, les tranchées s'étendent tout le long de la zone de modulation et au-delà de l'au moins une zone de transition, selon la deuxième direction x.

Selon un exemple, l'élément chauffant est à base de TiN. Selon un exemple, le guide d'onde est à base de SiN ou de Si.

Selon un exemple, chaque modulateur est configuré pour moduler une phase d'un faisceau lumineux de longueur d'onde λ se propageant au sein du guide d'onde selon une deuxième direction x. Selon un exemple, deux modulateurs adjacents du réseau d'antennes optiques phasées sont séparés par une tranchée prise parmi les première et deuxième tranchées. Selon un exemple, lesdits modulateurs sont disposés selon une troisième direction y selon un pas du réseau pr sensiblement égal à la longueur d'onde λ du faisceau lumineux.

Selon un exemple, la longueur d'onde λ et le pas du réseau pr sont inférieurs à 1 µm.

Selon un exemple, lors de la formation par gravure des première et deuxième tranchées, des flancs du guide d'onde sont formés sensiblement au droit des flancs de l'élément chauffant, lesdits flancs du guide d'onde formant au moins en partie les flancs des première et deuxième tranchées.

Selon un exemple, lors de la formation de l'empilement de base, le motif de guide d'onde est défini de sorte à présenter, en projection selon la première direction z, une zone Z1 dite élargie destinée à former une zone de modulation du guide d'onde, ladite zone élargie Z1 présentant une largeur L prise selon une troisième direction y. Selon un exemple, l'élément chauffant est défini de sorte à présenter une largeur Lc selon la troisième direction y, telle que Lc < L, de sorte que, lors de la formation par gravure des première et deuxième tranchées, la zone élargie Z1 du motif de guide d'onde soit au moins en partie gravée selon la première direction z.

Selon un exemple, le motif de guide d'onde est défini de sorte à présenter, en projection selon la première direction z, une zone d'injection Z3 de largeur I selon la troisième direction y telle que I < Lc < L, et une zone de transition Z2 intercalée entre la zone d'injection Z3 et la zone élargie Z1, de sorte que les flancs de l'élément chauffant interceptent des bords de la zone de transition Z2, en projection selon la première direction z.

Selon un exemple, l'élément chauffant recouvre, en projection selon la première direction z, une partie de la zone de transition Z2 et une partie de la zone d'injection Z3, de sorte que les première et deuxième tranchées s'étendent au-delà de la zone de transition Z2 selon la deuxième direction x.

Selon un exemple, la gravure de l'empilement de base se fait au travers d'une ouverture d'un masque à base de résine au-dessus de l'élément chauffant, ladite ouverture présentant une première dimension I31 selon la deuxième direction x inférieure à une longueur Ic de l'élément chauffant 13 selon ladite deuxième direction x, et une deuxième dimension L31 selon une troisième direction y supérieure à une largeur Lc de l'élément chauffant selon ladite troisième direction y.

Selon un exemple, la formation par gravure des première et deuxième tranchées comprend au moins une première gravure configurée pour graver la couche d'encapsulation initiale et au moins une deuxième gravure configurée pour graver le motif de guide d'onde.

Selon un exemple, l'au moins un modulateur comprend un premier modulateur et un deuxième modulateur séparés par une tranchée prise parmi les première et deuxième tranchées. Selon un exemple, le premier modulateur comprend un premier élément chauffant et le deuxième modulateur comprend un deuxième élément chauffant, lesdits premier et deuxième éléments chauffants (13) étant séparés par un pas de réseau pr inférieur à 1 µm, pris selon la troisième direction y.

Selon un exemple, la formation de l'empilement de base comprend une définition de premier et deuxième motifs de guide d'onde présentant respectivement des première et deuxième zones élargies Z1 continues entre elles.

Sauf incompatibilité, des caractéristiques techniques décrites en détail pour un mode de réalisation donné peuvent être combinées aux caractéristiques techniques décrites dans le contexte d'autres modes de réalisation décrits à titre exemplaire et non limitatif, de manière à former un autre mode de réalisation qui n'est pas nécessairement illustré ou décrit. Un tel mode de réalisation n'est évidemment pas exclu de l'invention.

Dans le cadre de la présente invention, le guide d'onde est destiné à assurer la propagation d'un faisceau lumineux selon une direction principale de propagation, prise selon l'axe x dans les dessins d'accompagnement. Le faisceau lumineux est de préférence cohérent, monochromatique, et de longueur d'onde λ. Il se propage de préférence selon un unique mode de propagation optique, typiquement le mode optique **fondamental.** Le faisceau lumineux est alors dit « monomode ».

Il est précisé que, dans le cadre de la présente invention, les termes « sur », « surmonte », « recouvre », « sous-jacent », en « vis-à-vis » et leurs équivalents ne signifient pas forcément « au contact de ». Ainsi par exemple, le dépôt d'une première couche sur une deuxième couche, ne signifie pas obligatoirement que les deux couches sont directement au contact l'une de l'autre, mais signifie que la première couche recouvre au moins partiellement la deuxième couche en étant soit directement à son contact, soit en étant séparée d'elle par au moins une autre couche ou au moins un autre élément.

Une couche peut par ailleurs être composée de plusieurs sous-couches d'un même matériau ou de matériaux différents.

On entend par un substrat, un élément, une couche, « à base » d'un matériau A, un substrat, un élément, une couche comprenant ce matériau A uniquement ou ce matériau A et éventuellement d'autres matériaux, par exemple des éléments d'alliage et/ou des éléments dopants. Ainsi, un guide d'onde à base de nitrure de silicium SiN peut par exemple comprendre du nitrure de silicium non stoechiométrique (SixNx), ou du nitrure de silicium stoechiométrique (Si3N4).

On entend par « gravure sélective vis-à-vis de » ou « gravure présentant une sélectivité vis-à-vis de » une gravure configurée pour enlever un matériau A ou une couche A vis-à-vis d'un matériau B ou d'une couche B, et présentant une vitesse de gravure du matériau A supérieure à la vitesse de gravure du matériau B. La sélectivité est le rapport entre la vitesse de gravure du matériau A sur la vitesse de gravure du matériau B.

Un repère de préférence orthonormé, comprenant les axes x, y, z est représenté sur les figures annexées. Lorsqu'un seul repère est représenté sur une même planche de figures, ce repère s'applique à toutes les figures de cette planche.

Sauf mention contraire, les largeurs sont prises selon la direction y du repère annexé. Lorsque les flancs ne sont pas parfaitement parallèles entre eux, par exemple à cause des imperfections liées aux procédés de fabrication, la largeur retenue peut être la valeur de largeur mesurée la plus élevée, ou la valeur moyenne de largeur le long de la hauteur des flancs. Par exemple, la largeur d'un guide d'onde peut être mesurée au niveau de son sommet. La largeur d'une tranchée peut être mesurée entre les sommets de deux guides d'onde adjacents. La propagation du faisceau lumineux se fait typiquement selon x.

Les termes relatifs tels que « sur », « surmonte », « sous », « sous-jacent », « au-**dessus** », « en-dessous » se réfèrent à des positions prises selon la direction z. Cette liste de termes n'est pas exhaustive. D'autres termes relatifs pourront être facilement précisés au besoin, en se référant aux dessins d'accompagnement.

Dans la présente demande de brevet, la hauteur et la profondeur sont prises selon z.

Les termes « vertical », « verticalement » se réfèrent à une direction selon z. Les termes « horizontal », « horizontalement » se réfèrent à une direction dans le plan xy. Le terme « latéral », lorsqu'il s'agit d'un déplacement ou d'un positionnement, se réfère également à une direction dans le plan xy, typiquement la direction y.

Un élément situé « à l'aplomb » ou « au droit d'» un autre élément signifie que ces deux éléments sont situés tous deux sur une même ligne orientée verticalement sur les figures.

La figure 2 illustre un modulateur 1 de phase thermo-optique selon un mode de réalisation de la présente invention. Le modulateur 1 comprend en empilement selon z un guide d'onde 11, une couche d'encapsulation 12, et un élément chauffant 13. Le guide d'onde 11 repose typiquement sur une base 14 en un matériau pouvant présenter un indice de réfraction proche de celui de la couche d'encapsulation 12. De préférence, la couche d'encapsulation 12 et la base 14 sont en un même matériau. La base 14 et la couche d'encapsulation 12 permettent typiquement de confiner le faisceau lumineux au sein du guide d'onde 11 par contraste d'indices. Ainsi, l'indice de réfraction du matériau de guide d'onde 11 est typiquement supérieur aux indices de réfraction des matériaux de la base 14 de la couche d'encapsulation 12. Selon un exemple, le guide d'onde 11 est à base de nitrure de silicium et la base 14 et la couche d'encapsulation 12 sont à base d'oxyde de silicium. Selon un autre exemple, les guides d'onde 11 est à base de silicium et la base 14 et la couche d'encapsulation 12 sont à base d'oxyde de silicium. La base 14 repose typiquement sur un substrat, par exemple un substrat massif à base de silicium.

Le modulateur 1 est bordé par des tranchées 21, 22 de largeur Lt selon y, et de profondeur dp selon z. La largeur Lt est de préférence comprise entre 200 nm et 1 µm, typiquement de l'ordre de 300 nm. La profondeur dp est de préférence comprise entre quelques centaines de nanomètres et quelques microns. Les tranchées 21, 22 s'étendent de préférence selon z jusqu'au sein de la couche formant la base 14, voire jusqu'à l'interface entre la base 14 et le substrat. Le substrat peut servir de couche d'arrêt pour la gravure des tranchées 21, 22. L'empilement 10 repose ainsi sur une partie 14s en saillie de la base 14 ou du substrat. Cette partie 14s en saillie peut présenter une hauteur de quelques centaines de nanomètres. Cela permet d'augmenter le confinement thermique au sein du guide d'onde 11. Selon une possibilité alternative, l'empilement 10 repose sur une base 14 sous forme de couche plane. Dans ce cas, les tranchées 21, 22 s'arrêtent sensiblement dans le plan de l'interface 141 entre le guide d'onde 11 et la base 14. Selon une autre possibilité, les tranchées 21, 22 s'arrêtent au-dessus du plan de l'interface 141. Dans ce dernier cas, la section du guide d'onde 11 dans le plan yz peut présenter une forme en T inversé. Une telle géométrie correspond à un guide d'onde en arête.

Le guide d'onde 11 présente des flancs 111, 112 débouchant chacun dans les tranchées 21, 22. Les flancs 111, 112 ne sont pas couverts par un matériau d'encapsulation. Ils forment ainsi directement une partie des flancs 210, 220 des tranchées correspondantes 21, 22. Une fine couche dite *liner,* de l'ordre de quelques nanomètres d'épaisseur, typiquement d'épaisseur inférieure à 10 nm, peut éventuellement couvrir les flancs 111, 112 du guide d'onde 11.

La couche d'encapsulation 12 présente des flancs 121, 122 débouchant chacun dans les tranchées 21, 22. Les flancs121, 122 sont sensiblement dans le prolongement des flancs111, 112, respectivement.

L'élément chauffant 13 surmonte la couche d'encapsulation 12. Il est typiquement à base de TiN. Il peut comprendre d'autres couches, par exemple une couche d'accroche en Ti. Selon un exemple, l'élément chauffant 13 comprend une couche d'accroche en Ti de 10 nm surmontée par une couche en TiN de 100 nm. L'élément chauffant 13 permet typiquement de chauffer par effet Joule le guide d'onde 11. L'élément chauffant 13 présente une largeur Lc selon y typiquement comprise entre 300 nm et 1000 nm, par exemple de l'ordre de 600 nm. L'élément chauffant 13 présentent des flancs 131, 132 débouchant chacun dans les tranchées 21, 22. Les flancs 131, 132 ne sont pas couverts par un matériau d'encapsulation. Ils forment ainsi directement une partie des flancs 210, 220 des tranchées correspondantes 21, 22. Les flancs 131, 132 sont sensiblement dans le prolongement des flancs 121, 122, respectivement. L'élément chauffant 13 présente un sommet 133 de préférence non couvert par un matériau d'encapsulation. Le sommet 133 peut être exposé à l'air.

Les flancs 111,121, 131 forment au moins en partie un flanc 210 de la tranchée 21. Ils sont de préférence sensiblement compris dans un même plan P1. Les flancs 112,122, 132 forment au moins en partie un flanc 220 de la tranchée 22. Ils sont de préférence sensiblement compris dans un même plan P2. Les plans P1, P2 sont de préférence idéalement verticaux et parallèles entre eux. En pratique, ces plans P1, P2 peuvent présenter un angle de quelques degrés par rapport à la verticale. Les flancs 210, 220 présentent dès lors une légère pente, typiquement due à la gravure des tranchées 21, 22. Les tranchées 21, 22 sont ainsi disposées au plus près de l'empilement 10. Cela permet de réduire l'encombrement latéral du modulateur 1. Cela permet également de réduire le volume total à chauffer par l'élément chauffant 13. Le chauffage du guide d'onde 11 se fait donc de manière plus efficace. Cela réduit la consommation d'énergie du modulateur 1.

Les tranchées 21, 22 sont de préférence remplies d'air. Cela permet de confiner efficacement la chaleur produite dans le guide d'onde 11, lors d'une modulation par effet thermo-optique. La fréquence de modulation peut ainsi être augmentée. Cela permet également de confiner efficacement le faisceau lumineux au sein du guide d'onde 11, par contraste d'indice entre le guide d'onde 11 et l'air. Selon une possibilité, les tranchées 21, 22 peuvent être remplies par un matériau de remplissage.

Comme illustré à la figure 2, plusieurs modulateurs 1 peuvent être disposés les uns à côté des autres, selon un pas de réseau pr minimisé. Un réseau 2 d'antennes optiques phasées compact peut ainsi être obtenu. En particulier, un pas de réseau pr inférieur au micron, par exemple de l'ordre de 900 nm, peut être réalisé. Cela permet de réaliser des OPA 2 fonctionnant pour des longueurs d'onde submicroniques, typiquement à une longueur d'onde À ≈ 905 nm.

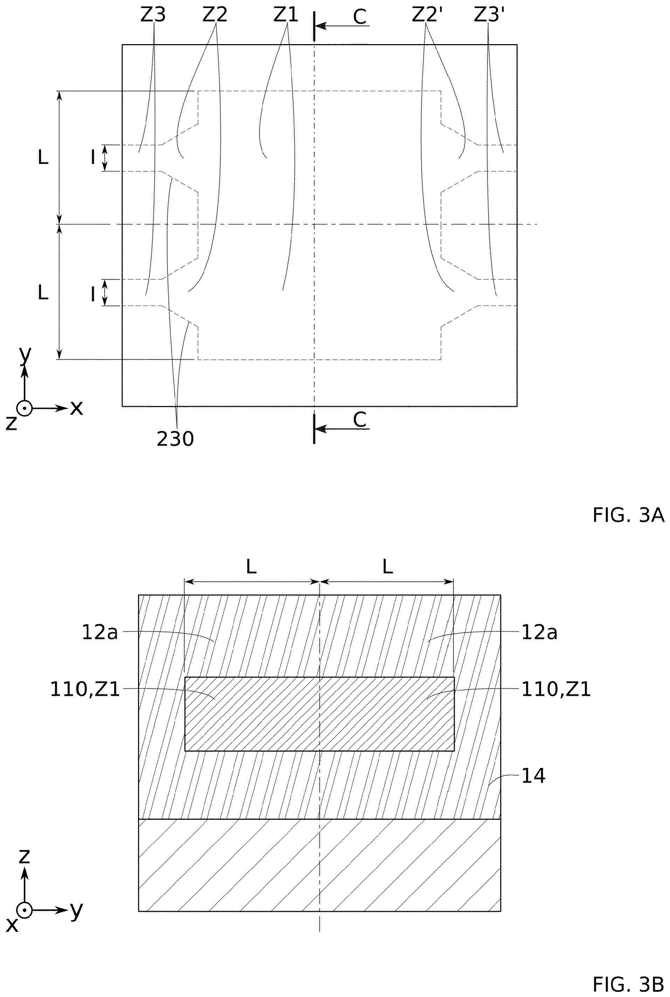

Les figures 3A à 8B illustrent un procédé de fabrication d'un modulateur 1 et/ou d'un réseau 2 d'antennes optiques phasées. Les figures nA, nB (n=3...8) illustrent respectivement en vue de dessus et en coupe transverse selon le plan C-C, une étape du procédé.

Comme illustré aux figures 3A, 3B, lors de la formation de l'empilement de base, un motif 110 de guide d'onde est d'abord défini. Deux motifs 110 de guide d'onde sont illustrés à la figure 3A. Chaque motif 110 comprend de préférence une zone élargie Z1 de largeur L, et de préférence une zone d'injection Z3 de largeur I, et de préférence une zone de transition Z2 intercalée entre la zone élargie Z1 et la zone d'injection Z3. La largeur I de la zone d'injection Z3 est de préférence comprise entre 300 nm et 600 nm. La largeur L de la zone élargie Z1 est strictement supérieure à la largeur I. Elle est de préférence comprise entre 600 nm et 2 µm.

La zone élargie Z1 est destinée à former une zone de modulation du modulateur 1. La zone d'injection Z3 est destinée à injecter le faisceau lumineux, de préférence de façon monomode, dans la zone de modulation. La zone de transition Z2, également dénommée *taper* en anglais, est destinée à guider le faisceau lumineux depuis la zone d'injection Z3 vers la zone de modulation. Cette zone de transition Z2 présente ainsi typiquement une forme tronconique, ou d'hexaèdre à deux faces parallèles trapézoïdales, vue de dessus. De façon symétrique, des zones Z2', Z3' sont de préférence prévues sur le côté opposé du modulateur, en sortie de la zone de modulation. Sur les figures 3A, 3B, les motifs 110 de guide d'onde sont continus entre eux par l'intermédiaire de leurs zones élargies Z1 respectives. Selon une autre possibilité, les motifs 110 de guide d'onde peuvent être disjoints.

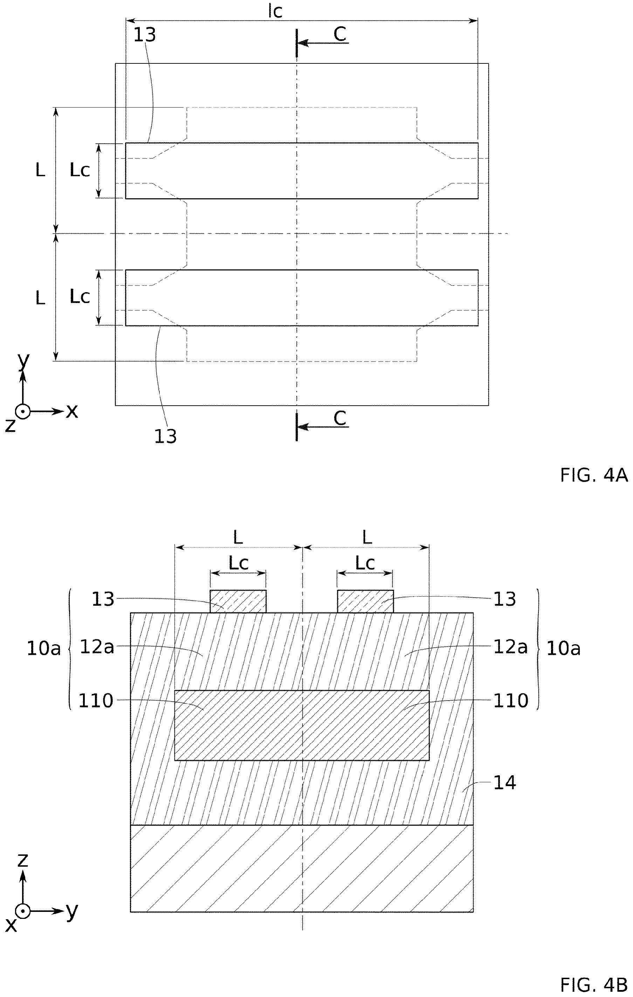

Comme illustré aux figures 4A, 4B, après définition des motifs 110 et formation de la couche d'encapsulation initiale 12a, le ou les éléments chauffants 13 sont formés. Le ou les empilements de base 10a sont ainsi obtenus. Chaque élément chauffant 13 présente une longueur Ic et une largeur Lc avec Lc < L, et de préférence Lc > I. La largeur Lc de l'élément chauffant 13 est de préférence comprise entre 300 nm et 900 nm, par exemple 600 nm. Avantageusement, la définition d'une zone élargie Z1 de largeur L strictement supérieure à la largeur Lc de l'élément chauffant 13 permet de tolérer une erreur de positionnement selon y de l'élément chauffant 13 vis-à-vis de la zone de modulation du modulateur. Ainsi, même si un décalage de quelques dizaines de nanomètres selon y survient lors de la formation de l'élément chauffant 13, ce dernier couvre toujours sur toute sa largeur Lc une partie sous-jacente de la zone élargie Z1 du motif 110 de guide d'onde. Ainsi, après gravure, les flancs de la zone de modulation du guide d'onde se trouvent toujours sensiblement à l'aplomb des flancs de l'élément chauffant 13.

L'élément chauffant 13 s'étend de préférence selon x au-delà des zones de transition Z2, Z2', de préférence jusqu'aux zones d'injection Z3, Z3'. L'élément chauffant 13 intercepte ainsi, en projection selon z, les bords 230 de la zone de transition sous-jacente. La zone de transition Z2 permet également de tolérer un décentrage selon y de l'élément chauffant 13 vis-à-vis de la zone d'injection Z3. Le faisceau lumineux peut ainsi rester monomode lors de son injection dans la zone de modulation. Cela permet en particulier d'éviter des pertes d'insertion dans la zone de modulation. La formation de l'élément chauffant 13 peut se faire de façon classique par dépôt/lithographie/gravure ou par « lift off » (décollement en français).

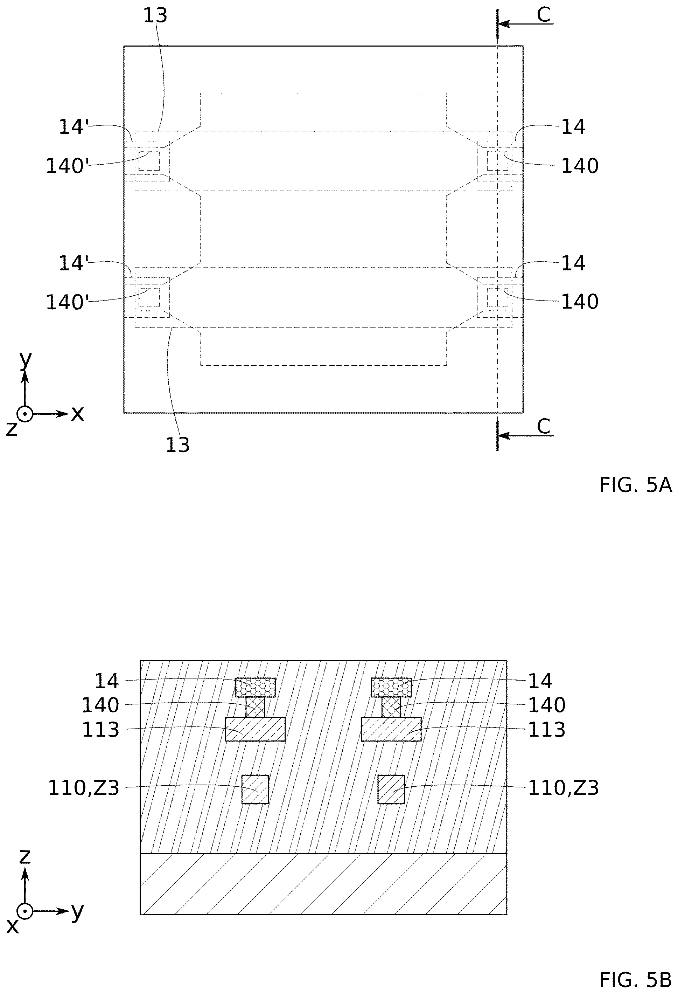

Comme illustré aux figures 5A, 5B, après formation du ou des éléments chauffants 13, des contacts électriques 14, 14' peuvent être formé de part et d'autre de chaque élément chauffant 13. Les contacts 14, 14' peuvent être formés directement sur l'élément chauffant 13, ou être connectés de façon classique par des vias 140, comme illustré sur la figure 5B. Une couche d'encapsulation, typiquement à base du même matériau que la couche d'encapsulation 12, est de préférence formée sur et autour des éléments chauffants 13, et planarisée.

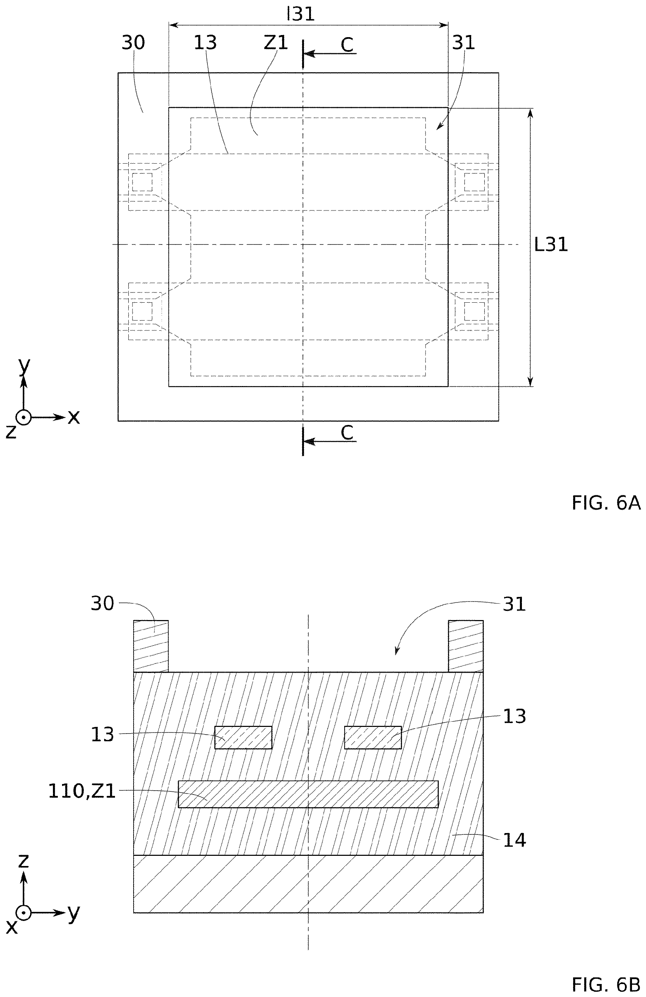

Comme illustré aux figures 6A, 6B, un masque de gravure 30, typiquement à base de résine photosensible, est ensuite formé au-dessus des éléments chauffants 13, par exemple à la surface de la couche d'encapsulation entourant les éléments chauffants. Le masque de gravure 30 comprend une ouverture 31 plus large (L31 > Lc) et moins longue (I31 < Ic) que les éléments chauffants 13. Cette ouverture 31 est également plus large et plus longue que la ou les zones élargies Z1 sous-jacentes. Cela permet ensuite de graver les parties des zones élargies Z1 non couvertes par les éléments chauffants 13. Cette ouverture 31 s'étend de préférence selon x au-delà de la zone de transition Z2, et de préférence jusqu'à la zone d'injection Z3.

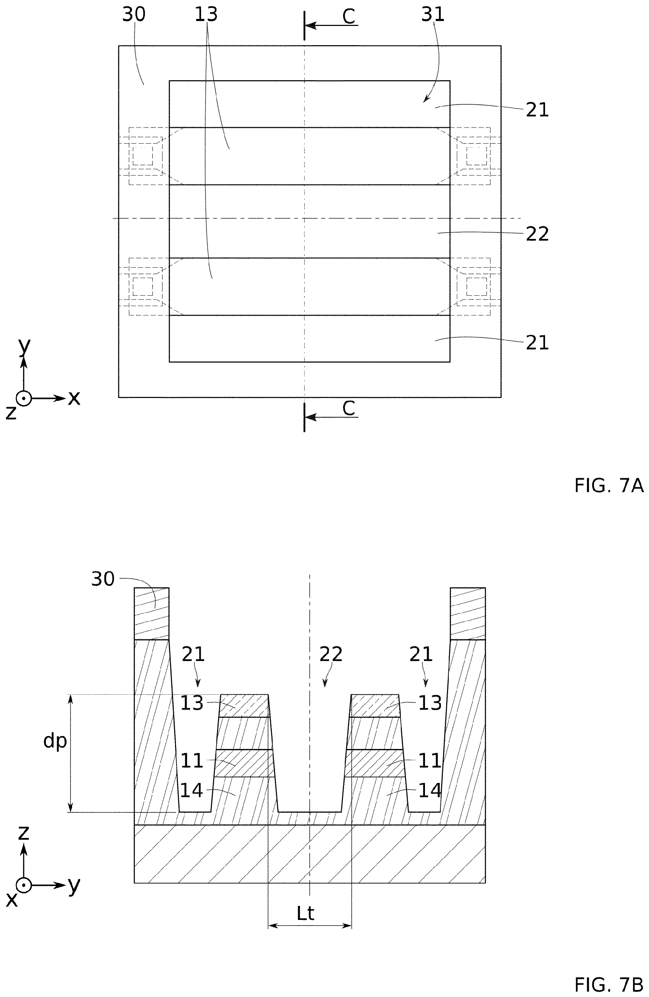

Comme illustré aux figures 7A, 7B, des tranchées 21, 22 sont ensuite formées par gravure au travers de l'ouverture 31 du masque de gravure 30. Les éléments chauffants 13 forment avantageusement un masque de gravure complémentaire au masque 30. Ainsi, lors de la gravure, les matériaux situés au-dessus des éléments chauffants, et les matériaux situés entre les éléments chauffants, en projection selon z, sont au moins en partie retirés. A l'issue de la gravure, les tranchées sont formées sur une profondeur dp et les éléments chauffants sont exposés, sous l'ouverture 31. Le haut des tranchées se trouve au niveau du sommet de l'élément chauffant, et le fond des tranchées se trouve typiquement dans la couche de base sous le niveau du guide d'onde. La profondeur dp des tranchées 21, 22 est ainsi limitée par rapport à celle du modulateur connu illustré à la figure 1. Cela permet de mieux maîtriser le profil de gravure. Selon une possibilité, la gravure des tranchées 21, 22 se fait selon une seule et même étape de gravure.

Selon une possibilité préférée, la gravure des tranchées 21, 22 se fait en plusieurs étapes de gravure successives. Ainsi, une première gravure est configurée pour graver de façon anisotrope selon z le matériau de la ou des couches d'encapsulation. Cette première gravure est de préférence sélective vis-à-vis du matériau de l'élément chauffant 13. Pour une couche d'encapsulation à base de SiO2, la première gravure est par exemple effectuée par plasma à base d'une chimie fluorée CF4 et CHF3. Cette première gravure est de préférence configurée pour s'arrêter sur le motif 110 de guide d'onde. Une deuxième gravure peut ensuite être effectuée pour graver de façon anisotrope selon z le motif 110 de guide d'onde. Pour un motif 110 à base de SiN, cette deuxième gravure peut être effectuée par plasma à base d'une chimie Ar/O2. Cela permet de limiter la rugosité des flancs 111, 112 du guide d'onde 11. De façon préférée, la deuxième gravure est arrêtée après que le motif 110 ait été gravé sur toute sa hauteur. Selon une autre possibilité, par exemple pour former un guide d'onde en arête, la deuxième gravure est arrêtée avant que le motif 110 ait été gravé sur toute sa hauteur. Optionnellement, une troisième gravure peut être effectuée pour graver au moins en partie la couche de base 14 sur laquelle repose l'empilement. Pour une couche de base 14 à base de SiO2, cette troisième gravure peut être effectuée avec les mêmes paramètres que la première gravure. L'utilisation de gravures spécifiques en fonction des différents matériaux à graver permet de mieux maîtriser le profil de gravure des tranchées. Les flancs 210, 220 des tranchées 21, 22 peuvent dès lors être sensiblement plans.

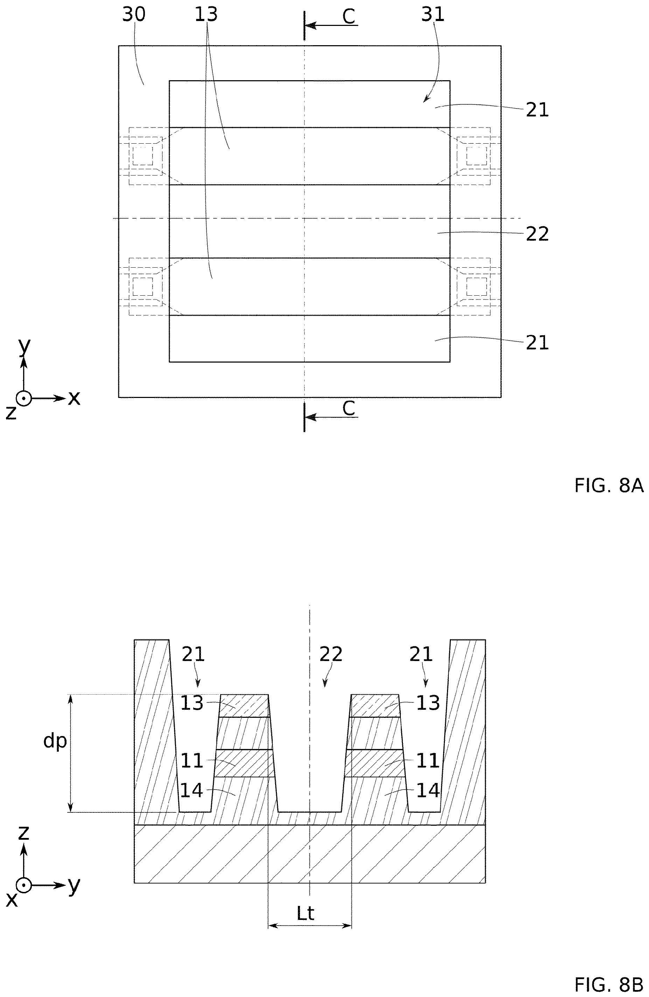

Comme illustré aux figures 8A, 8B, après formation des tranchées 21, 22, le masque de gravure 30 est retiré. Un modulateur 1 de phase thermo-optique et/ou un réseau OPA sont ainsi obtenus. Ce procédé est parfaitement compatible avec les technologies classiques de la microélectronique. Il limite éventuellement le nombre d'étapes nécessaires par rapport à un procédé de fabrication classique.

L'invention n'est pas limitée aux modes de réalisations précédemment décrits. Par exemple, le guide 11 n'est pas forcément rectiligne. Le guide 11 peut être un anneau. La zone d'injection Z3 peut se situer dans un plan inférieur à celui de la zone de modulation du guide d'onde 11, avec un couplage vertical entre lesdites zones. Une telle géométrie peut être envisagée avec ou sans *taper* sur l'un ou l'autre des niveaux.

## Revendications

1. Modulateur (1) de phase thermo-optique comprenant un empilement (10) selon une première direction (z), ledit empilement (10) comprenant un guide d'onde (11) configuré pour guider un faisceau lumineux de longueur d'onde λ selon une deuxième direction (x), une couche d'encapsulation (12) surmontant le guide d'onde (11) et un élément (13) dit chauffant configuré pour chauffer le guide d'onde (11), ledit élément chauffant (13) surmontant la couche d'encapsulation (12), ledit modulateur (1) comprenant en outre des première et deuxième tranchées (21, 22) s'étendant de part et d'autre de l'empilement (10),
le modulateur (1) étant **caractérisé en ce que** le guide d'onde (11), la couche d'encapsulation (12) et l'élément chauffant (13) présentent chacun des premiers et deuxièmes flancs (111, 112, 121, 122, 131, 132) tels que les premiers flancs (111, 121, 131) du guide d'onde, de la couche d'encapsulation et de l'élément chauffant forment au moins en partie un flanc (210) de la première tranchée (21), et les deuxièmes flancs (112, 122, 132) du guide d'onde, de la couche d'encapsulation et de l'élément chauffant forment au moins en partie un flanc (220) de la deuxième tranchée (22).

2. Modulateur (1) selon la revendication précédente dans lequel les premiers flancs (111, 121, 131) du guide d'onde (11), de la couche d'encapsulation (12) et de l'élément chauffant (13) débouchent directement dans la première tranchée (21) et dans lequel les deuxièmes flancs (112, 122, 132) du guide d'onde (11), de la couche d'encapsulation (12) et de l'élément chauffant (13) débouchent directement dans la deuxième tranchée (22).

3. Modulateur (1) selon l'une quelconque des revendications précédentes dans lequel les premiers flancs (111, 121, 131) du guide d'onde (11), de la couche d'encapsulation (12) et de l'élément chauffant (13) sont sensiblement compris dans un même premier plan (P1), et dans lequel les deuxièmes flancs (112, 122, 132) du guide d'onde (11), de la couche d'encapsulation (12) et de l'élément chauffant (13) sont sensiblement compris dans un même deuxième plan (P2).

4. Modulateur (1) selon l'une quelconque des revendications précédentes dans lequel l'élément chauffant (13) s'étend au-delà des tranchées (21, 22) selon la deuxième direction (x).

5. Modulateur (1) selon l'une quelconque des revendications précédentes dans lequel le guide d'onde (11) comprend une zone de modulation et au moins une zone de transition (Z2, Z2'), et dans lequel les tranchées (21, 22) s'étendent tout le long de la zone de modulation et au-delà de l'au moins une zone de transition (Z2, Z2'), selon la deuxième direction (x).

6. Réseau (2) d'antennes optiques phasées comprenant une pluralité de modulateurs (1) de phase thermo-optiques selon l'une quelconque des revendications précédentes, dans lequel deux modulateurs (1) adjacents sont séparés par une tranchée (22) prise parmi les première et deuxième tranchées (21, 22), lesdits modulateurs (1) étant disposés selon une troisième direction (y) selon un pas du réseau pr sensiblement égal à la longueur d'onde λ du faisceau lumineux.

7. Réseau (2) d'antennes optiques phasées selon la revendication précédente dans lequel la longueur d'onde λ et le pas du réseau pr sont inférieurs à 1 µm.

8. Procédé de réalisation d'au moins un modulateur (1) de phase thermo-optique comprenant un empilement (10) selon une première direction (z), ledit empilement (10) comprenant un guide d'onde (11) configuré pour guider un faisceau lumineux de longueur d'onde λ selon une deuxième direction (x), une couche d'encapsulation (12) surmontant le guide d'onde (11), un élément (13) dit chauffant configuré pour chauffer le guide d'onde et surmontant la couche d'encapsulation (12), ledit modulateur (1) comprenant en outre des première et deuxième tranchées (21, 22) s'étendant de part et d'autre de l'empilement (10), le procédé comprenant :
- Une formation d'un empilement de base (10a) comprenant, selon la première direction (z), un motif (110) de guide d'onde, une couche d'encapsulation initiale (12a) surmontant le motif (110) de guide d'onde, et l'élément chauffant (13) surmontant la couche d'encapsulation initiale (12a),
- Une gravure de l'empilement de base selon la première direction (z), configurée pour former les première et deuxième tranchées (21, 22) et l'empilement (10) bordé par lesdites première et deuxième tranchées (21, 22), le guide d'onde (11) étant obtenu à partir du motif de guide d'onde (110), et la couche d'encapsulation (12) étant obtenue à partir de la couche d'encapsulation initiale (12a),
Le procédé étant **caractérisé en ce que** l'élément chauffant (13) forme un masque de gravure lors de la formation par gravure des première et deuxième tranchées (21, 22), de sorte que le guide d'onde (11), la couche d'encapsulation (12) et l'élément chauffant (13) présentent chacun des premiers et deuxièmes flancs (111, 112, 121, 122, 131, 132) tels que les premiers flancs (111, 121, 131) du guide d'onde, de la couche d'encapsulation et de l'élément chauffant forment au moins en partie un flanc (210) de la première tranchée (21), et les deuxièmes flancs (112, 122, 132) du guide d'onde, de la couche d'encapsulation et de l'élément chauffant forment au moins en partie un flanc (220) de la deuxième tranchée (22).

9. Procédé selon la revendication précédente dans lequel, lors de la formation de l'empilement de base (10a), le motif (110) de guide d'onde est défini de sorte à présenter, en projection selon la première direction (z), une zone (Z1) dite élargie destinée à former une zone de modulation du guide d'onde (11) et présentant une largeur L prise selon une troisième direction (y), et l'élément chauffant (13) est défini de sorte à présenter une largeur Lc selon la troisième direction (y), telle que Lc < L, de sorte que, lors de la formation par gravure des première et deuxième tranchées (21, 22), la zone élargie (Z1) du motif (110) de guide d'onde soit au moins en partie gravée selon la première direction (z).

10. Procédé selon la revendication précédente dans lequel le motif (110) de guide d'onde est défini de sorte à présenter, en projection selon la première direction (z), une zone d'injection (Z3) de largeur I selon la troisième direction (y) telle que I < Lc < L, et une zone de transition (Z2) intercalée entre la zone d'injection (Z3) et la zone élargie (Z1), de sorte que les flancs (131, 132) de l'élément chauffant (13) interceptent des bords (230) de la zone de transition (Z2), en projection selon la première direction (z).

11. Procédé selon la revendication précédente dans lequel l'élément chauffant (13) recouvre, en projection selon la première direction (z), une partie de la zone de transition (Z2) et une partie de la zone d'injection (Z3), de sorte que les première et deuxième tranchées (21, 22) s'étendent au-delà de la zone de transition (Z2) selon la deuxième direction (x).

12. Procédé selon l'une quelconque des revendications 8 à 11 dans lequel la formation par gravure des première et deuxième tranchées (21, 22) comprend au moins une première gravure configurée pour graver la couche d'encapsulation initiale (12a) et au moins une deuxième gravure configurée pour graver le motif de guide d'onde (110).

13. Procédé selon l'une quelconque des revendications 8 à 12 dans lequel la gravure de l'empilement de base se fait au travers d'une ouverture (31) d'un masque (30) à base de résine au-dessus de l'élément chauffant (13), ladite ouverture (31) présentant une première dimension I31 selon la deuxième direction (x) inférieure à une longueur Ic de l'élément chauffant (13) selon ladite deuxième direction (x), et une deuxième dimension L31 selon une troisième direction (y) supérieure à une largeur Lc de l'élément chauffant (13) selon ladite troisième direction (y).

14. Procédé selon l'une quelconque des revendications 8 à 13 dans lequel l'au moins un modulateur (1) comprend un premier modulateur et un deuxième modulateur séparés par une tranchée (22) prise parmi les première et deuxième tranchées (21, 22), le premier modulateur comprenant un premier élément chauffant et le deuxième modulateur comprenant un deuxième élément chauffant (13), lesdits premier et deuxième éléments chauffants (13) étant séparés par un pas de réseau pr inférieur à 1 µm, pris selon une troisième direction (y).

15. Procédé selon la revendication précédente dans lequel la formation de l'empilement de base comprend une définition de premier et deuxième motifs de guide d'onde (110) présentant respectivement des première et deuxième zones élargies (Z1) continues entre elles.

## Patentansprüche

1. Thermooptischer Phasenmodulator (1), der eine Stapelung (10) entlang einer ersten Richtung (z) umfasst, wobei die Stapelung (10) einen Wellenleiter (11) umfasst, der dazu konfiguriert ist, ein Lichtbündel mit Wellenlänge Δ entlang einer zweiten Richtung (x) zu leiten, eine Kapselungsschicht (12), die den Wellenleiter (11) überlagert, und ein als heizend bezeichnetes Element, das dazu konfiguriert ist, den Wellenleiter (11) zu erwärmen, wobei das heizende Element (13) die Kapselungsschicht (12) überlagert, wobei der Modulator (1) außerdem einen ersten und einen zweiten Graben (21, 22) umfasst, die sich zu beiden Seiten der Stapelung (10) erstrecken,
Modulator (1) **dadurch gekennzeichnet, dass** der Wellenleiter (11), die Kapselungsschicht (12) und das heizende Element (13) jeweils eine erste und eine zweite Flanke (111, 112, 121, 122, 131, 132) derart aufweisen, dass die ersten Flanken (111, 121, 131) des Wellenleiters, der Kapselungsschicht und des heizenden Elements mindestens einen Teil einer Flanke (210) des ersten Grabens (21) bilden, und die zweiten Flanken (112, 122, 132) des Wellenleiters, der Kapselungsschicht und des heizenden Elements mindestens zum Teil eine Flanke (220) des zweiten Grabens (22) bilden.

2. Modulator (1) nach dem vorstehenden Anspruch, wobei die ersten Flanken (111, 121, 131) des Wellenleiters (11), der Kapselungsschicht (12) und des heizenden Elements (13) direkt in den ersten Graben (21) münden, und wobei die zweiten Flanken (112, 122, 132) des Wellenleiters (11), der Kapselungsschicht (12) und des heizenden Elements (13) direkt in den zweiten Graben (22) münden.

3. Modulator (1) nach einem der vorstehenden Ansprüche, wobei die ersten Flanken (111, 121, 131) des Wellenleiters (11), der Kapselungsschicht (12) und des heizenden Elements (13) im Wesentlichen in derselben ersten Ebene (P1) liegen, und wobei die zweiten Flanken (112, 122, 132) des Wellenleiters, der Kapselungsschicht (12) und des heizenden Elements (13) im Wesentlichen in derselben zweiten Ebene (P2) liegen.

4. Modulator (1) nach einem der vorstehenden Ansprüche, wobei sich das heizende Element (13) über die Gräben (21, 22) entlang der zweiten Richtung (x) erstreckt.

5. Modulator (1) nach einem der vorstehenden Ansprüche, wobei der Wellenleiter (11) eine Modulationszone und mindestens eine Übergangszone (Z2, Z2') umfasst, und wobei sich die Gräben (21, 22) entlang der gesamten Modulationszone und über mindestens eine Übergangszone (Z2, Z2') hinaus entlang der zweiten Richtung (x) erstrecken.

6. Netz (2) aus optischen Phasenantennen, das eine Vielzahl thermooptischer Phasenmodulatoren (1) nach einem der vorstehenden Ansprüche umfasst, wobei die beiden angrenzenden Modulatoren (1) durch einen Graben (22) aus dem ersten und dem zweiten Graben (21, 22) genommen getrennt sind, wobei die Modulatoren (1) entlang einer dritten Richtung (y) gemäß einer Maschenweite pr des Netzes im Wesentlichen gleich der Wellenlänge Δ des Lichtbündels angeordnet sind.

7. Netz (2) aus optischen Phasenantennen nach dem vorstehenden Anspruch, wobei die Wellenlänge Δ und die Maschenweite des Netzes pr kleiner als 1 µm sind.

8. Herstellungsverfahren mindestens eines thermooptischen Phasenmodulators (1), der eine Stapelung (10) entlang einer ersten Richtung (z) umfasst, wobei die Stapelung (10) einen Wellenleiter (11) umfasst, der dazu konfiguriert ist, ein Lichtbündel mit Wellenlänge Δ entlang einer zweiten Richtung (x) zu leiten, eine Kapselungsschicht (12), die den Wellenleiter (11) überlagert, und ein als heizend bezeichnetes Element (13), das dazu konfiguriert ist, den Wellenleiter zu erwärmen und das die Kapselungsschicht (12) überlagert, wobei der Modulator (1) außerdem einen ersten und einen zweiten Graben (21, 22) umfasst, die sich zu beiden Seiten der Stapelung (10) erstrecken, wobei das Verfahren Folgendes umfasst:
- ein Bilden einer Basisstapelung (10a), die entlang der ersten Richtung (z) eine Wellenleiterstruktur (110), eine anfängliche Kapselungsschicht (12a), die die Wellenleiterstruktur (110) überlagert, umfasst, und wobei das heizende Element (13) die anfängliche Kapselungsschicht (12a) überlagert,
- ein Ätzen der Basisstapelung entlang der ersten Richtung (z), die dazu konfiguriert ist, den ersten und den zweiten Graben (21, 22) und die Stapelung (10), die von dem ersten und dem zweiten Graben (21, 22) begrenzt ist, zu bilden, und wobei der Wellenleiter (11) ausgehend von der Wellenleiterstruktur (110) erhalten wird, und die Kapselungsschicht (12) ausgehend von der anfänglichen Kapselungsschicht (12a) erhalten wird,
Verfahren **dadurch gekennzeichnet, dass** das heizende Element (13) eine Ätzmaske beim Bilden durch Ätzen des ersten und des zweiten Grabens (21, 22) derart bildet, dass der Wellenleiter (11), die Kapselungsschicht (12) und das heizende Element (13) jeweils eine erste und eine zweite Flanke (111, 112, 121, 122, 131, 132) derart aufweisen, dass die ersten Flanken (111, 121, 131) des Wellenleiters, der Kapselungsschicht und des heizenden Elements mindestens zum Teil eine Flanke (210) des ersten Grabens (21) bilden, und die zweiten Flanken (112, 122, 132) des Wellenleiters, der Kapselungsschicht und des heizenden Elements mindestens zum Teil eine Flanke (220) des zweiten Grabens (22) bilden.

9. Verfahren nach dem vorstehenden Anspruch, wobei beim Bilden der Basisstapelung (10a) die Wellenleiterstruktur (110) derart definiert wird, dass sie vorragend entlang der ersten Richtung (z) eine erweitert genannte Zone (Z1) aufweist, die dazu bestimmt ist, eine Modulationszone des Wellenleiters (11) zu bilden, und eine Breite L entlang der dritten Richtung (y) genommen aufweist, und das heizende Element (13) derart definiert ist, dass es eine Breite Lc entlang der dritten Richtung (y) derart aufweist, dass Lc < L, so dass, beim Bilden durch Ätzen des ersten und des zweiten Grabens (21, 22) die erweiterte Zone (Z1) der Wellenleiterstruktur (110) mindestens zum Teil entlang der ersten Richtung (z) geätzt wird.

10. Verfahren nach dem vorstehenden Anspruch, wobei die Wellenleiterstruktur (110) derart definiert ist, dass sie vorragend entlang der ersten Richtung (z) eine Injektionszone (Z3) mit Breite L entlang der dritten Richtung (y) derart aufweist, dass L < Lc < L, und eine Übergangszone (Z2), die zwischen die Injektionszone (Z3) und die erweiterte Zone (Z1) derart eingefügt ist, dass die Flanken (131, 132) des heizenden Elements (13) Ränder (230) der Übergangszone (Z2), die entlang der ersten Richtung (z) vorragen, abfangen.

11. Verfahren nach dem vorstehenden Anspruch, wobei das heizende Element (13) entlang der ersten Richtung (z) vorragend einen Teil der Übergangszone (Z2) und einen Teil der Injektionszone (Z3) derart bedeckt, dass sich der erste und der zweite Graben (21, 22) über die Übergangszone (Z2) hinaus entlang der zweiten Richtung (x) erstrecken.

12. Verfahren nach einem der Ansprüche 8 bis 11, wobei das Bilden durch Ätzen des ersten und des zweiten Grabens (21, 22) mindestens eine erste Ätzung umfasst, die dazu konfiguriert ist, die anfängliche Kapselungsschicht (12a) zu ätzen, und mindestens eine zweite Ätzung, die dazu konfiguriert ist, die Wellenleiterstruktur (110) zu ätzen.

13. Verfahren nach einem der vorstehenden Ansprüche 8 bis 12, wobei die Ätzung der Basisstapelung durch eine Öffnung (31) einer Maske (30) auf Harzbasis oberhalb des heizenden Elements (13) erfolgt, wobei die Öffnung (31) eine erste Dimension 131) entlang der zweiten Richtung (x) aufweist, die kleiner als eine Länge le des heizenden Elements (13) entlang der zweiten Richtung (x) ist, und eine zweite Dimension L31 entlang einer dritten Richtung (y), die größer ist als eine Breite Le des heizenden Elements (13) entlang der dritten Richtung (y).

14. Verfahren nach einem der Ansprüche 8 bis 13, wobei der mindestens eine Modulator (1) einen ersten Modulator und einen zweiten Modulator umfasst, die durch einen Graben (22), der aus dem ersten und zweiten Graben (21, 22) genommen wird, wobei der erste Modulator ein erstes heizendes Element umfasst, und der zweite Modulator ein zweites heizendes Element (13) umfasst, wobei das erste und das zweite heizende Element (13) durch eine Maschenweite pr kleiner als 1 µm, entlang einer dritten Richtung (y) genommen, getrennt sind.

15. Verfahren nach dem vorstehenden Anspruch, wobei das Bilden der Basisstapelung eine Definition einer ersten und einer zweiten Wellenleiterstruktur (110) umfasst, die jeweils eine erste und eine zweite erweiterte Zone (Z1), die miteinander durchgehend sind, aufweisen.

## Claims

1. Thermo-optic phase modulator (1) comprising a stack (10) in a first direction (z), said stack (10) comprising a waveguide (11) configured to guide a light beam of wavelength λ in a second direction (x), an encapsulation layer (12) surmounting the waveguide (11) and a so-called heating element (13) configured to heat the waveguide (11), said heating element (13) surmounting the encapsulation layer (12), said modulator (1) further comprising first and second trenches (21, 22) extending on either side of the stack (10),
the modulator (1) being **characterised in that** the waveguide (11), the encapsulation layer (12) and the heating element (13) each have first and second flanks (111, 112, 121, 122, 131, 132) such as the first flanks (111, 121, 131) of the waveguide, of the encapsulation layer, and of the heating element form at least partially one flank (210) of the first trench (21), and the second flanks (112, 122, 132) of the waveguide, of the encapsulation layer and of the heating element form at least partially one flank (220) of the second trench (22).

2. Modulator (1) according to the preceding claim, wherein the first flanks (111, 121, 131) of the waveguide (11), of the encapsulation layer (12) and of the heating element (13) open directly into the first trench (21) and wherein the second flanks (112, 122, 132) of the waveguide (11), of the encapsulation layer (12) and of the heating element (13) open directly into the second trench (22).

3. Modulator (1) according to any one of the preceding claims, wherein the first flanks (111, 121, 131) of the waveguide (11), of the encapsulation layer (12) and of the heating element (13) are substantially comprised in one same first plane (P1), and wherein the second flanks (112, 122, 132) of the waveguide (11), of the encapsulation layer (12) and of the heating element (13) are substantially comprised in one same second plane (P2).

4. Modulator (1) according to any one of the preceding claims, wherein the heating element (13) extends beyond the trenches (21, 22) in the second direction (x).

5. Modulator (1) according to any one of the preceding claims, wherein the waveguide (11) comprises a modulation zone and at least one transition zone (Z2, Z2'), and wherein the trenches (21, 22) extend all along the modulation zone and beyond the at least one transition zone (Z2, Z2'), in the second direction (x).

6. Optical phased array (2) comprising a plurality of thermo-optic phase modulators (1) according to any one of the preceding claims, wherein two adjacent modulators (1) are separated by a trench (22) taken from among the first and second trenches (21, 22), said modulators (1) being disposed in a third direction (y) according to an array pitch pr substantially equal to the wavelength λ of the light beam.

7. Optical phased array (2) according to the preceding claim, wherein the wavelength λ and the array pitch pr are less than 1µm.

8. Method for producing at least one thermo-optic phase modulator (1) comprising a stack (10) in a first direction (z), said stack (10) comprising a waveguide (11) configured to guide a light beam of wavelength λ in a second direction (x), an encapsulation layer (12) surmounting the waveguide (11), a so-called heating element (13) configured to heat the waveguide and surmounting the encapsulation layer (12), said modulator (1) further comprising first and second trenches (21, 22) extending on either side of the stack (10), the method comprising:
- A formation of a base stack (10a) comprising, in the first direction (z), a waveguide pattern (110), an initial encapsulation layer (12a) surmounting the waveguide pattern (110), and the heating element (13) surmounting the initial encapsulation layer (12a),
- An etching of the base stack in the first direction (z), configured to form the first and second trenches (21, 22) and the stack (10) bordered by said first and second trenches (21, 22), the waveguide (11) being obtained from the waveguide pattern (110), and the encapsulation layer (12) being obtained from the initial encapsulation layer (12a),
The method being **characterised in that** the heating element (13) forms an etching mask during the formation by etching of the first and second trenches (21, 22), such that the waveguide (11), the encapsulation layer (12) and the heating element (13) each have first and second flanks (111, 112, 121, 122, 131, 132) such as the first flanks (111, 121, 131) of the waveguide, of the encapsulation layer and of the heating element form at least partially one flank (210) of the first trench (21), and the second flanks (112, 122, 132) of the waveguide, of the encapsulation layer and of the heating element form at least partially one flank (220) of the second trench (22).

9. Method according to the preceding claim, wherein, during the formation of the base stack (10a), the waveguide pattern (110) is defined, so as to have, projecting in the first direction (z), a so-called enlarged zone (Z1) intended to form a modulation zone of the wave guide (11) and having a width L taken in a third direction (y), and the heating element (13) is defined, so as to have a width Lc in the third direction (y), such that Lc < L, such that, during the formation by etching of the first and second trenches (21, 22), the enlarged zone (Z1) of the waveguide pattern (110) is at least partially etched in the first direction (z).

10. Method according to the preceding claim, wherein the waveguide pattern (110) is defined so as to have, projecting in the first direction (z), an injection zone (Z3) of width I in the third direction (y) such that I < Lc < L, and a transition zone (Z2) inserted between the injection zone (Z3) and the enlarged zone (Z1), such that the flanks (131, 132) of the heating element (13) intercept the edges (230) of the transition zone (Z2), projecting in the first direction (z).

11. Method according to the preceding claim, wherein the heating element (13) covers, projecting in the first direction (z), a part of the transition zone (Z2) and a part of the injection zone (Z3), such that the first and second trenches (21, 22) extend beyond the transition zone (Z2) in the second direction (x).

12. Method according to any one of claims 8 to 11, wherein the formation by etching of the first and second trenches (21, 22) comprises at least one first etching to etch the initial encapsulation layer (12a) and at least one second etching configured to etch the waveguide pattern (110).

13. Method according to any one of claims 8 to 12, wherein the etching of the base stack is done through an opening (31) of a resin-based mask (30) above the heating element (13), said opening (31) having a first dimension I31 in the second direction (x) less than a length Ic of the heating element (13) in said second direction (x), and a second dimension L31 in a third direction (y) greater than a width Lc of the heating element (13) in said third direction (y).

14. Method according to any one of claims 8 to 13, wherein the at least one modulator (1) comprises a first modulator and a second modulator separated by a trench (22) taken from among the first and second trenches (21, 22), the first modulator comprising a first heating element and the second modulator comprising a second heating element (13), said first and second heating elements (13) being separated by an array pitch pr less than 1µm, taken in a third direction (y).

15. Method according to the preceding claim, wherein the formation of the base stack comprises a definition of first and second waveguide patterns (110) respectively having first and second enlarged zones (Z1) which are continuous to one another.
